# EUROPÄISCHE PATENTSCHRIFT

(11) **EP 0 832 382 B1**
(45) Veröffentlichungstag und Bekanntmachung des Hinweises auf die Patenterteilung: **09.04.2003**
(21) Anmeldenummer: 96914042.5
(22) Anmeldetag: 04.06.1996
(51) Int. Cl.: F16J 15/26

(54) **TROCKENLAUFDICHTUNGSRING**
GAS SEALING RING
BAGUE D'ETANCHEITE POUR MILIEU GAZEUX

(30) Priorität: 14.06.1995 EP 95810400
(43) Veröffentlichungstag der Anmeldung: 01.04.1998
(73) Patentinhaber: Burckhardt Compression AG, 8404 Winterthur (CH)
(72) Erfinder: FEISTEL, Norbert, CH-8408 Winterthur (CH)
(74) Vertreter: Dr. Graf & Partner
(86) Internationale Anmeldenummer: CH9600214
(87) Internationale Veröffentlichungsnummer: WO97000395

(56) Entgegenhaltungen:
- CH-A- 186 907
- DE-U- 7 318 583
- FR-A- 2 108 390
- GB-A- 278 564
- US-A- 2 036 721

## Beschreibung

Die Erfindung betrifft einen Trockenlaufdichtungsring gemäss dem Oberbegriff von Anspruch 1.

Dichtungsringe sind üblicherweise paarweise in einer Reihenschaltung hintereinander angeordnet und bilden derart eine sogenannte Packung. Der auf die einzelnen Dichtungsringe wirkende Differenzdruck bewirkt die Anpressung derer Dichtflächen an die Gleitfläche des abzudichtenden Körpers, beispielsweise einer Kolbenstange. Solche Dichtungsringe sind zum Beispiel aus dem Patent CH 439 897 bekannt. Diese bekannten Dichtungsringe weisen den Nachteil auf, dass die an die Gleitfläche angepressen Dichtflächen eine starke Reibungswärme verursachen, was zu einer Überhitzung und zu einem raschen Verschleiss führt. Dies gilt insbesondere bei der Verwendung der Dichtungsringe in trockenlaufenden Kolbenkompressoren, die im Verdichtungsteil ohne jede Fremdschmierung auskommen. Solche Kompressoren weisen feststehende Dichtungsringe auf, an denen eine Kolbenstange vorbeibewegt wird.

Es ist Aufgabe der vorliegenden Erfindung einen für trockenlaufende Vorrichtungen geeigneten Dichtungsring vorzuschlagen, dessen Dichtungsvermögen ein verbessertes Verhalten aufweist.

Diese Aufgabe wird gelöst gemäss den Merkmalen von Anspruch 1. Die Unteransprüche 2 bis 7 beziehen sich auf weitere, vorteilhafte Ausgestaltungen der Erfindung. Die Abdichtungsvorrichtung gemäß Anspruch 8 benutzt einen erfindungsgemäßen Dichtungsring.

Der erfindungsgemässe Dichtungsring weist in axialer Richtung eine Höhe H sowie eine zur trockenlaufenden Gleitfläche des abzudichtenden Körpers hin orientierte Fläche auf, welche derart ausgestaltet ist, dass sie über einen Teil der Höhe H parallel zur Gleitfläche verläuft und derart eine Dichtfläche bildet. Der restliche Teil der Höhe H des Dichtungsrings ist von der Gleitfläche beabstandet.

In einer vorteilhaften Ausgestaltung des erfindungsgemässen Dichtungsringes ist der restliche Teil der Höhe des Dichtungsringes, der nicht auf der Gleitfläche aufliegt, sich konisch erweiternd ausgestaltet.

Der Dichtungsring ist in einem trockenlaufenden Kolbenkompressor insbesondere derart bezüglich der Kolbenstange anzuordnen, dass der sich konisch erweiternde Bereich gegen den Zylinderraum hin ausgerichtet ist und sich gegen den Zylinderraum hin erweitert. Ein derartiger Dichtungsring weist den Vorteil auf, dass die auf der Kolbenstange aufliegende Dichtungsfläche des Dichtungsrings relativ klein ist, was zum Beispiel eine verringerte Reibung bewirkt. Ein weiterer Vorteil der erfindungsgemässen Ausgestaltung der Fläche ist darin zu sehen, dass durch deren Formgebung in Verbindung mit der reduzierten Dichtfläche das Gas bestrebt ist, zwischen der Dichtfläche und der Kolbenstange durchzuströmen, sodass zwischen der Dichtfläche und der Kolbenstange eine Gaslagerung entsteht. Eine derartige Gaslagerung weist den Vorteil auf, dass die Reibung zwischen Kolbenstange und Dichtfläche weiter verringert wird.

Ein derartiger erfindungsgemässer Dichtungsring ist insbesondere dann vorteilhaft anzuwenden, wenn die feststehenden Dichtelemente in axialer Richtung eine hohe Dichtigkeit aufweisen, sodass eine Gaslagerung auftritt, weil ein Grossteil des Gases zwischen Kolbenstange und Dichtfläche ausströmt.

Die Ausgestaltung der zur Gleitfläche hin orientierten Fläche in axialer Verlaufsrichtung kann durch eine Vielzahl vom Ausführungsformen realisiert werden, derart, dass die Fläche einen ersten Teilbereich mit einer zur Gleitfläche parallelen verlaufenden und einen zweiten Teilbereich mit einer zur Gleitfläche beabstandeten Fläche aufweist.

Der erfindungsgemässe Dichtungsring eignet sich insbesondere zum Abdichten von unter sehr hohem Druck arbeitenden trockenlaufenden Kolbenkompressoren.

Die folgenden Figuren beschreiben mehrere Ausführungsbeispiele der Erfindung. Es zeigen:
- Fig. 1a: eine Aufsicht eines ringförmigen Dichtungsteils;
- Fig. 1b: eine Seitenansicht des Dichtungsteils gemäss Fig. 1a;
- Fig. 1c: eine Aufsicht auf ein Abschlussteil;
- Fig. 1d: eine Seitenansicht des Abschlussteils gemäss Fig. 1c;
- Fig. 1e: ein zusammengesetzter Dichtungsring in Aufsicht;
- Fig. 1f: eine Seitenansicht des zusammengesetzten Dichtungsrings gemäss Fig. 1e;
- Fig. 1g: ein Schnitt durch das Dichtungsteil gemäss Fig. 1a entlang der Linie A-A;
- Fig. 2: eine perspektivische Ansicht einer weiteren Ausführungsform eines Dichtungsringes;
- Fig. 3: einen Längsschnitt durch eine Trockenlaufdichtungsanordnung;
- Fig. 4: eine Aufsicht auf den Dichtungsring gemäss Fig. 2;
- Fig. 4a: einen Querschnitt durch den Dichtungsring entlang der Linie (B-B) ;
- Fig. 4b: einen weiteren Querschnitt durch den Dichtungsring entlang der Linie (C-C) ;
- Fig. 4c: eine Seitenansicht auf den Dichtungsring aus Richtung (E).

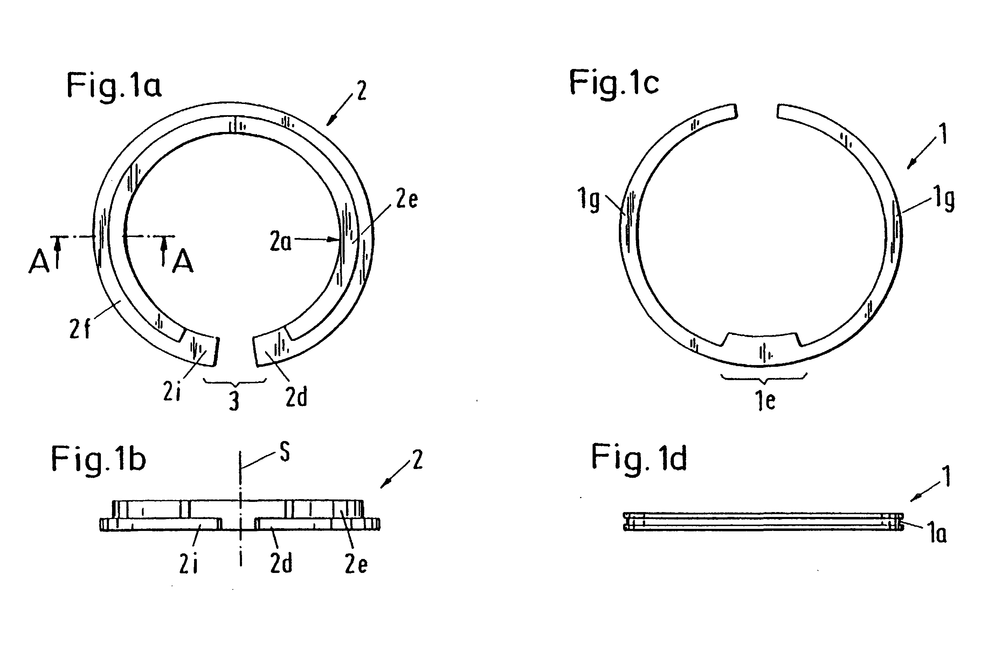

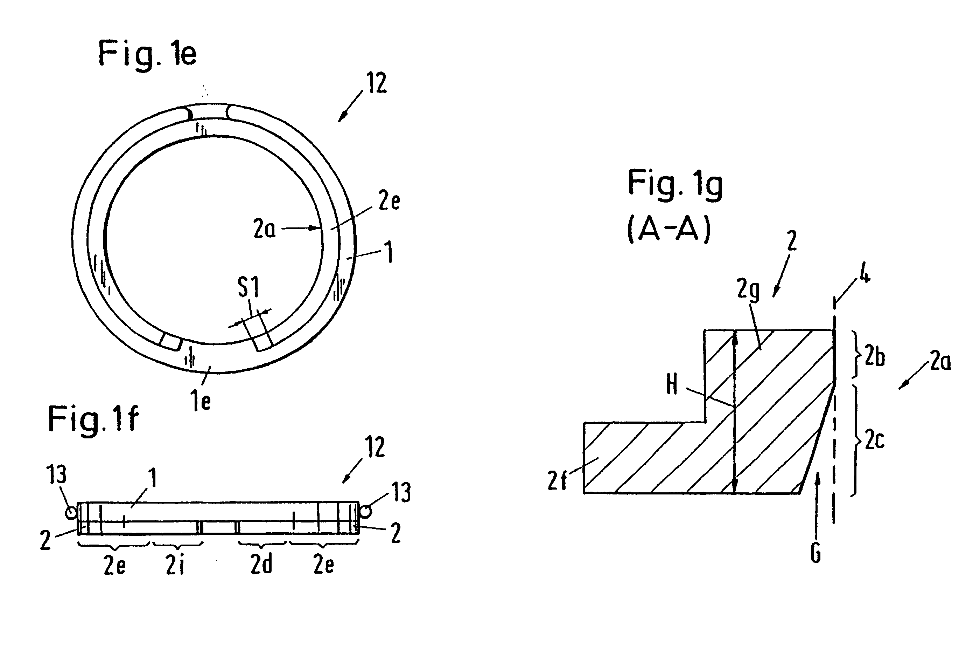

Fig. 1a zeigt ein ringförmiges Dichtungsteil 2, der einen sektorartigen Ausschnitt 3 aufweist, so dass das Dichtungsteil 2 an dieser Stelle eine Öffnung aufweist. Das Dichtungsteil 2 weist eine zur Kolbenstange hin orientierte Fläche 2a auf. Fig. 1g zeigt einen Schnitt entlang der Linie A-A, und zeigt den L-förmigen Querschnitt, den das Dichtungsteil 2 in der vorliegenden Ausführungsform aufweist. Die Fläche 2a weist eine Höhe H auf, wobei ein Teil 2b der Fläche 2a zylinderförmig ausgestaltet ist und auf der gestrichelt angedeuteten Kolbenstange 4 aufliegt und eine Dichtfläche 2b bildet. Die Dichtfläche 2b ist in axialer Richtung zumindest 1 mm breit. Ein weiterer Teil 2c der Fläche 2a weist eine konisch sich von der Oberfläche der Kolbenstange 4 entfernende Fläche auf. Das von der Seite des Zylinders heranströmende Gas (G) tritt zwischen den konisch verlaufenden Teil 2c und die Kolbenstange 4 ein und strömt weiter zwischen der Dichtfläche 2b und der Kolbenstange 4 durch. Somit entsteht eine Gaslagerung zwischen diesen beiden Flächen, was die Reibung stark reduziert.

Der gesamte Dichtungsring 12 weist ein elastisches Verhalten auf und ist vorteilhafterweise von einer in der Nut 1a liegenden Schlauchfeder 13 umgeben, sodass der Dichtungsring 12 elastisch vorgespannt auf der Kolbenstange 4 aufliegt. Das zwischen der Dichtfläche 2b und der Kolbenstange 4 durchströmende Gas bewirkt eine zur Wirkung der Schlauchfeder entgegengesetzte Kraft. Das zwischen der Dichtfläche 2b und der Kolbenstange 4 durchströmende Gas bewirkt somit eine Reduktion der Anpresskraft des Dichtelementes an die Kolbenstange 4.

Das Dichtungsteil 2 weist ein Hauptteil 2e auf, welches beidseitig in die Endteile 2i, 2d ausläuft. Aus der Seitenansicht gemäss Fig. 1b ist ersichtlich, dass die beiden Endteile 2i, 2d in Richtung einer Senkrechten S zu einer durch das Dichtungsteil 2 aufgespannten Ebene bzw. zur Bewegungsrichtung der Kolbenstange dünner ausgestaltet sind als das Hauptteil 2e. Fig. 1c zeigt ein Abschlussteil 1, das ein Hauptteil 1e aufweist, sowie beidseitig daran anschliessende Endteile 1g, welche ringförmig ausgestaltet sind. Fig. 1d zeigt eine Seitenansicht der Darstellung gemäss Fig. 1c des Abschlussteils 1, wobei das Abschlussteil 1 in Umfangsrichtung eine Ausnehmung 1a zur Aufnahme einer Schlauchfeder 13 aufweist. Sowohl das Dichtungsteil 2 als auch das Abschlussteil 1 weisen federnde Eigenschaften auf. Fig. 1e zeigt einen aus dem Abschlussteil 1 und dem Dichtungsteil 2 zusammengesetzten Dichtungsring 12. Dabei wurde das Abschlussteil 1 derart auf das Dichtungsteil 2 gelegt, dass das Abschlussteil 1 auf dem unteren Teil 2f des Dichtungsteiles 2 aufliegt, und dass das Abschlussteil 1 das obere Teil 2g des Dichtungsteils 2 ringförmig umschliesst. Das Hauptteil 1e bedeckt den Ausschnitt 3 des Dichtungsteiles 2, und liegt auf den Endteilen 2i, 2d in Richtung der Senkrechten S auf. Das Hauptteil 1e kann auf der gegen die Kolbenstange 4 hin weisenden Fläche einen wie in Fig. 1g dargestellten Verlauf aufweisen. Dadurch weist der Dichtungsring 12 über die ganze Mantelfläche der Kolbenstange 4 eine dichtende Funktion auf. Das Hauptteil 1e sowie das Dichtungsteil 2 weisen in Umfangsrichtung des Dichtungsteils 2 ein Spiel S1 auf. Vorteilhafterweise ist der Dichtungsring 12 von einer Schlauchfeder 13 umgeben, so dass die Dichtungsringscheibe unter eine Vorspannung steht. Während dem Einsatz des Dichtungsrings 12 als Dichtelement führt die Bewegung der Kolbenstange zu einem Verschleiss der Dichtfläche 2a, was einen Materialabtrag bewirkt. Die Schlauchfeder 13, das Spiel S1 sowie die federnden Eigenschaften der Dichtungsringscheibe gewährleisten, dass die Dichtfläche 2a weiterhin auf der Oberfläche der Kolbenstange aufliegen kann. Fig. 1f zeigt eine Seitenansicht des Dichtungsrings 12 gemäss Fig. 1e.

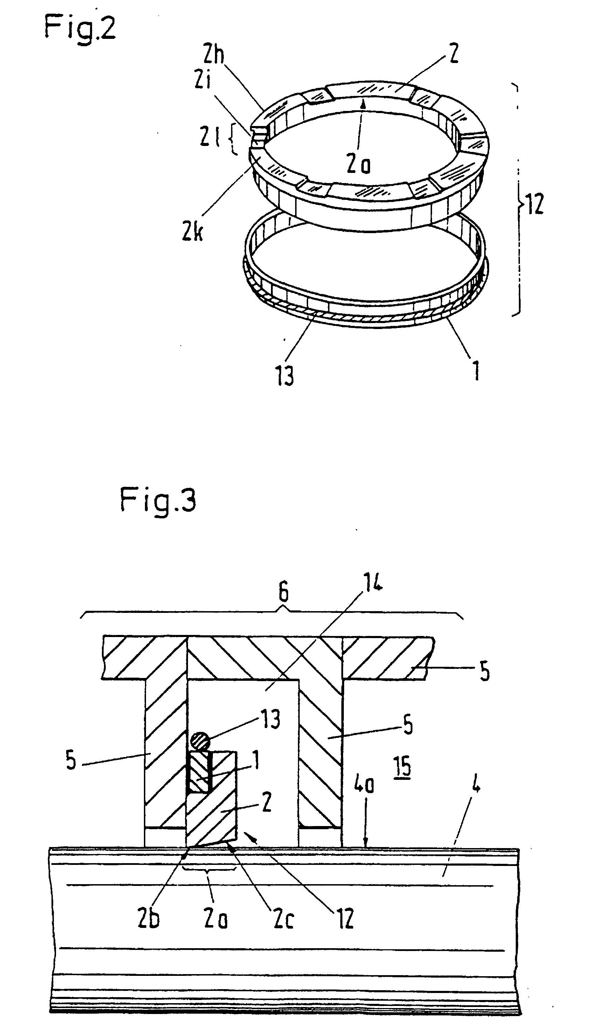

Fig. 2 zeigt in einer Explosionszeichung einen weiteren Dichtungsring 12, bestehend aus einem Dichtungsteil 2, einem in Umfangsrichtung des Dichtungsrings 2 über diesen anordbaren Deckring 1 sowie eine den Deckring 1 in Umfangsrichtung umspannende Schlauchfeder 3. Der Deckring 1 dichtet die Stossstelle 2l in radialer sowie in axialer Richtung ab.

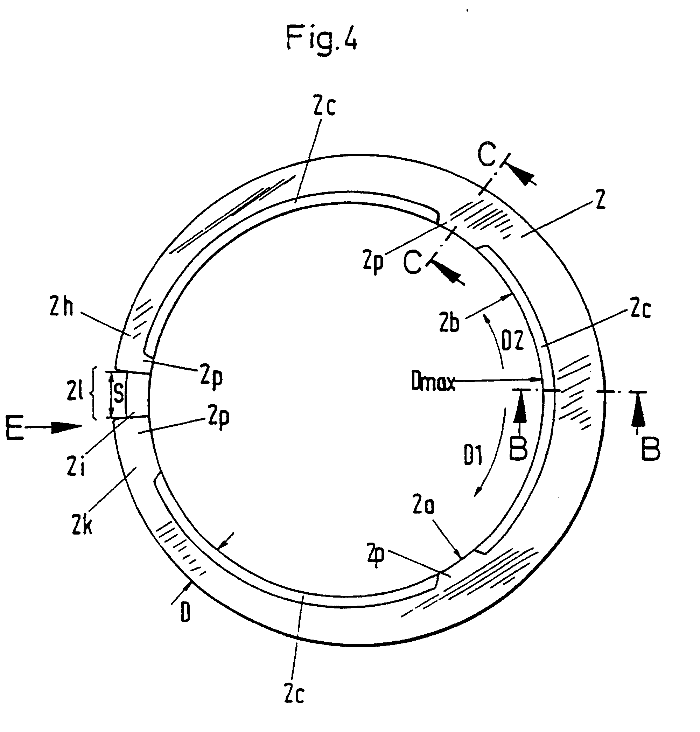

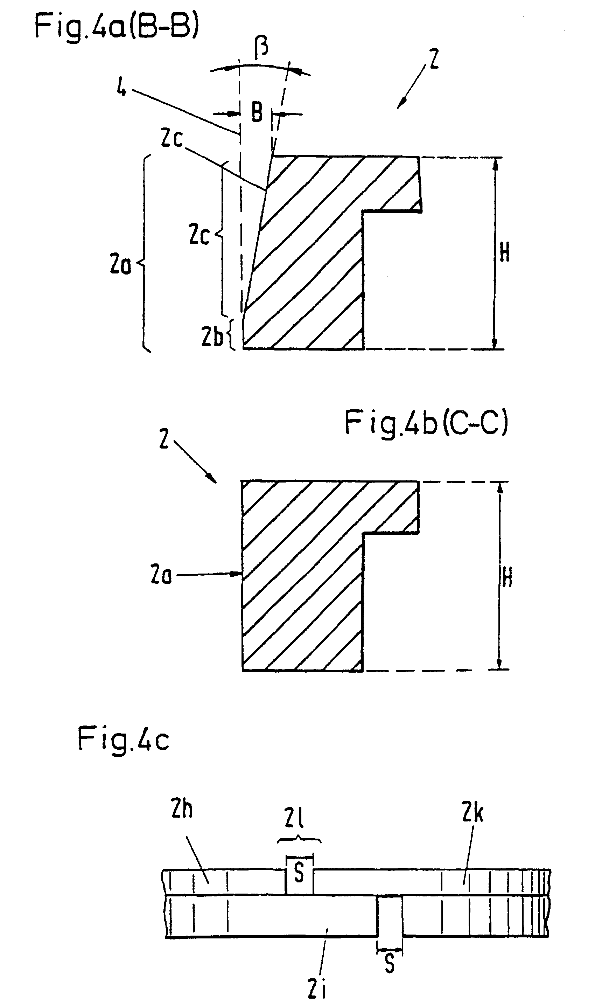

Die in Fig. 4 dargestellte Aufsicht des Dichtungsteils 2 weist eine entlang dem Innenkreis kreisförmig verlaufende Fläche 2a,2b auf, welche der Kolbenstange 4 zugewandt ist und eine Dichtfunktion ausübt. Das Dichtungsteil 2 ist als ein einteiliger Ring mit einer Teilung 2l ausgestaltet, sodass das Dichtungsteil 2 in zwei Enden 2h, 2k ausläuft. Das Ende 2k ist derart ausgestaltet, dass es einen in Umfangsrichtung des Dichtungsteils 2 verlaufenden Abschnitt 2i aufweist, welcher zusammen mit dem anderen Ende 2h eine in Umfangsrichtung überlappende Stossstelle ausbildet. Das Dichtungsteil 2 weist elastische Eigenschaften auf, sodass er im Bereich der Teilung 2l ein Spiel S aufweist. Im vorliegenden Ausführungsbeispiel ist das Dichtungsteil 2 derart ausgestaltet, dass dessen radiale Wandstärke D ausgehend von der der Teilung 2l gegenüberliegenden Stelle Dmax zur Teilung 2l hin, das heiss in Richtung D1 oder D2, kontinuierlich abnimmt. Dadurch weist auch ein Dichtungsteil, das aus einem Material mit einem höheren Elastizitäts-Modul wie zum Beispiel einem Hochtemperatur-Polymer gefertigt ist, zur Teilung 2l hin ein zunehmend elastischeres bzw. biegeweicheres Verhalten auf.

Fig. 3 zeigt einen Längsschnitt durch eine Trockenlaufdichtungsanordnung beziehungsweise einer sogenannten Packung 6. Dazu gehört zumindest eine die Kolbenstange 4 umgebende Dichtungskammer 14, die aus zwei Kammerringen 5 gebildet wird, und die zu dem zugeordneten Zylinderraum 15 hin dichtend verschraubt sind. In der Dichtungskammer 14 ist eine zweiteiliger Dichtungsring 12 angeordnet, umfassend ein Dichtungsteil 2 sowie einen Deckring 1. Zudem umspannt eine Schlauchfeder 13 den Deckring 1. Die Dichtungsfläche 2a weist gegen den Kompressionsraum 15 hin eine sich keilförmig erweiternd Fläche 2c auf.

Das Dichtungsteil 2 gemäss Fig. 4 weist eine Fläche 2a mit einer konusförmig verlaufenden Teilfläche 2c auf. Die Teilfläche 2c ist an drei Stellen unterbrochen durch einen Steg 2p. Fig. 4a zeigt einen Schnitt durch das Dichtungsteil 2 entlang der Linie B-B und zeigt die konusförig verlaufende Teilfläche 2c, welche sich in axialer Richtung erstreckt, sowie die zylindrisch verlaufende Teilfläche 2b, welche die Dichtung zwischen dem Dichtungsteil 2 und der Kolbenstange 4 bewirkt. Die konusförmig verlaufende Teilfläche 2c trifft unter einem Winkel β auf die Oberfläche der Welle 4. Fig. 4b zeigt einen Schnitt durch einen Steg 2p des Dichtungsteils 2 entlang der Linie C-C. Ein Steg 2p ist derart ausgebildet, dass die Innenfläche 2a in axialer Richtung eine Breite entsprechend der Breite H des Dichtungsteils 2 aufweist und parallel zur Oberfläche der Welle 4 verläuft. Ein Steg 2p liegt über der ganzen Breite H auf der Welle 4 auf und dient zur Stabilisierung der Lage des Dichtungsteils 2. Das dargestellte Ausführungsbeispiel weist drei über dem Umfang der Fläche 2a verteilt angeordnete Stege 2p auf, wobei ein Steg 2p im Bereich der Teilung 21 angeordnet ist. Ein Dichtungsteil 2 kann natürlich auch ohne Stege 2p ausgestaltet sein, sodass sich die konische Teilfläche 2c ohne Unterbruch über den gesamten Umfang der Fläche 2a erstreckt.

Die konisch verlaufende Teilfläche 2c weist gemäss Fig. 4a einen maximalen Abstand B zur Welle 4 auf. In einer Ausführungsform des Dichtungsteils 2 wird das Spiel S derart breit ausgestaltet, dass es eine Breite von "2 mal Pi (π) mal B" aufweist. Ein Dichtungsring 12 mit einem derartig ausgestalteten Dichtungsteil 2 bildet in einer ersten Betriebsphase ein Reibungsring und in einer zweiten Betriebsphase ein Strömungsring. In der ersten Betriebsphase weist des Dichtungsteil 2 eine konisch verlaufende Teilfläche 2c auf. Mit zunehmendem Verschleiss an der Dichtfläche 2b wird die konisch verlaufende Teilfläche 2c zurückgebildet, bis sich die Dichtfläche 2b über die gesamte Breite H erstreckt. Wird nun das Spiel S entsprechend einer Breite von "2 mal Pi (π) mal B" ausgestaltet, so wird das Spiel = Null sobald die Teilfläche 2c vollständig zurückgebildet ist. In diesem Zustand wird das Dichtungsteil 2 zu einen Strömungsring, weil, da das Spiel = Null beträgt, kaum mehr ein Verschleiss der Dichtfläche 2b erfolgt, sodass des Dichtungsteil 2 während der zweiten Betriebsphase eine ungefähr konstante Undichtigkeit aufweist, bzw. der Dichtungsring 1 während der zweiten Betriebsphase einen ungefähr gleichbleibenden, maximalen Strömungswiderstand aufweist.

Fig. 4c zeigt eine Seitenansicht des Dichtungsringes gemäss Fig. 4 aus Richtung E. Die Stossstelle des Dichtungsteils 2 weist die beiden Enden 2h, 2k auf, wobei das Ende 2h den in Umfangsrichtung verlaufenden Endabschnitt 2i aufweist, sodass sich eine in Umfangsrichtung überlappende Stossstelle mit einer Teilung 21 beziehungsweise mit einem Spiel S ergibt.

Die Teilfläche 2c ist nicht nur konusförmig verlaufend ausgestaltbar sondern kann jeden beliebigen Verlauf annehmen, derart, dass im Bereich der Teilfläche 2c zwischen der Welle 4 und dem Dichtungsteil 2 ein Abstand entsteht.

An der Stossstelle 21 sind vorteilhafterweise an jedem Endteil 2k, 2h jeweils ein Steg 2p angeordnet, um eine gute Dichtheit des Dichtungsringes zu erzielen. Entlang der Fläche (2a) können in Umfangsrichtung verteilt auch eine Mehrzahl von Stege 2p angeordnet sein, so zum Beispiel 2, 4, 7, 12 oder 24 Stege 2p. Die Stege 2p können in Umfangsrichtung sehr schmal ausgestaltet sein, sodass bezüglich der Umfangsrichtung der Abstand zwischen zwei Stegen 2p grösser oder um ein vielfaches grösser ist als die Breite eines Steges 2p. Die Stege 2p können mit einer konstanten Breite ausgeführt sein oder auch unterschiedliche Breiten aufweisen.

Das Dichtungsteil (2) kann aus einem Kunststoff wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) gefertigt sein.

## Patentansprüche

1. Trockenlaufdichtungsring (12) für eine trockenlaufende Kolbenstange (4) mit einem kreisförmigen Querschnitt, welcher in axialer Richtung eine Höhe (H) sowie eine zu einer Gleitfläche (4a) hin orientierte Fläche (2a) aufweist, und welcher eine radial zur axialen Richtung verlaufende Stirnfläche aufweist, **dadurch gekennzeichnet, dass** die gesamte zur Gleitfläche (4a) hin orientierte Fläche (2a) aus zwei in Verlaufsrichtung der Höhe (H) nacheinander folgend angeordneten Teilflächen (2b,2c) besteht, einer ersten, stufenfreien Teilfläche (2b), welche zylindrisch verlaufend ausgestaltet ist, um eine Dichtfläche (2b) zu bilden, und einer zweiten Teilfläche (2c), welche ausgehend von der ersten Teilfläche (2b) sich in Verlaufsrichtung der Höhe (H) erweiternd ausgestaltet ist, und dass die erste Teilfläche (2b) ausgehend von der Stirnfläche in Richtung der Höhe (H) verläuft.

2. Trockenlaufdichtungsring nach Anspruch 1, **dadurch gekennzeichnet, dass** sich die zweite Teilfläche (2c) konisch erweitert.

3. Trockenlaufdichtungsring nach einem der vorhergehenden Ansprüche, **dadurch gekennzeichnet, dass** der Dichtungsring eine Stossstelle (21) mit einem Ausgleichsspiel (S) aufweist, dass sich die zweite Teilfläche (2c) in radialer Richtung um einen maximalen Abstand B erweitert, und dass das Ausgleichsspiel (S) eine Breite von "2 mal Π mal B" aufweist.

4. Trockenlaufdichtungsring nach einem der vorhergehenden Ansprüche, **dadurch gekennzeichnet, dass** entlang der Fläche (2a) in Umfangsrichtung verteilt eine Mehrzahl von Stege (2p) angeordnet sind.

5. Trockenlaufdichtungsring nach einem der vorhergehenden Ansprüche, **dadurch gekennzeichnet, dass** dieser ein Dichtungsteil (2) umfasst, welches aus einem Kunststoff wie Polytetrafluorethylen (PTFE), einem modifizierten Hochtemperatur-Polymer wie Polyetheretherketon (PEEK), Polyetherketon (PEK), Polyimid (PI), Polyphenylensulfid (PPS), Polybenzimidazol (PBI), Polyamidimid (PAI) gefertigt ist.

6. Trockenlaufdichtungsring nach einem der vorhergehenden Ansprüche, **dadurch gekennzeichnet, dass** dieser derart ausgestaltet ist, dass die sich konisch erweiternde zweite Teilfläche (2c) gegen den Zylinderraum hin angeordnet werden kann.

7. Trockenlaufdichtungsring nach einem der vorhergehenden Ansprüche, **dadurch gekennzeichnet, dass** dieser eine Teilung (2l) aufweist und dass das Dichtungsteil (2) eine zur Teilung (2l) hin abnehmende radiale Wandstärke (D) aufweist.

8. Abdichtungsvorrichtung einer trockenlaufenden Kolbenstange (4) mit einem diese umgebenden Trockenlaufdichtungsring (12) nach einem der vorhergehenden Ansprüche, **dadurch gekennzeichnet, dass** der Trockenlaufdichtungsring eine Hochdruckseite von einer Niederdruckseite abgrenzt, und dass der Trockenlaufdichtungsring derart angeordnet ist, dass die zweite Teilfläche (2c) zur Hochdruckseite hin angeordnet ist und sich zur Hochdruckseite hin erweitert.

## Claims

1. Gas sealing ring (12) for a dry running piston rod (4) with a circular cross-section, which has a height (H) in the axial direction as well as a surface (2a) oriented towards a sliding surface (4a), and which has a front surface directing in radial direction with respect to the axial direction, **characterised in that** the whole surface (2a), which is oriented towards the sliding surface (4a), consists of two part surfaces (2b,2c), which, in direction of the height (H), are arranged one beside the other, a first part surface (2b) without steps, which extends cylindrically , in order to form a sealing surface (2b), and a second part surface (2c), which, starting from the first part surface (2b), widens along the direction of height (H), and that the first part surface (2b), starting from the front surface, extends in the direction of height (H).

2. Gas sealing ring in accordance with claim 1, **characterised in that** the second part surface (2c) widens conically.

3. Gas sealing ring in accordance with one of the previous claims, **characterised in that** the sealing ring has a ring gap (2l) with a compensatory clearance (S), **in that** the second part surface (2c) diverges conically in the radial direction by a maximum distance B, and **in that** the compensatory clearance (S) has a width of "2 times Π times B".

4. Gas sealing ring in accordance with one of the previous claims, **characterised in that** a plurality of webs (2p) is arranged to be distributed along the surface (2a) in the peripheral direction.

5. Gas sealing ring in accordance with one of the previous claims, **characterised in that** said ring comprises a sealing part (2) which is manufactured of a plastic such as polytetrafluoroethylene (PTFE) or of a modified high-temperature polymer such as poly(ether ether ketone) (PEEK), poly(ether ketone) (PEK), polyimide (PI), poly(phenylene sulphide) (PPS), polybenzimidazole (PBI), or polyamideimide (PAI).

6. Gas sealing ring in accordance with one of the previous claims, **characterised in that** said ring is built such, that the conically diverging second part (2c) surface is arranged towards the cylinder space.

7. Gas sealing ring in accordance with one of the previous claims, **characterised in that** said ring has a parting joint (2l), and **in that** the sealing part (2) has a radial wall thickness (D) decreasing towards the parting joint (2l).

8. Sealing device of a dry running piston rod (4) with a gas sealing ring (12) surrounding said rod, according to one of the previous claims, **characterised in that** the gas sealing ring separates a high pressure side from a low pressure side, and that the gas sealing ring is arranged such, that the second part surface (2c) is arranged toward the high pressure side, and that the second part surface (2c) widens towards the high pressure side.

## Revendications

1. Bague d'étanchéité à sec (12) pour une tige de piston (4) sans graissage avec une section transversale circulaire qui présente dans la direction axiale une hauteur (H) ainsi qu'une face (2a) orientée vers une face de glissement (4a) et qui présente une face frontale s'étendant radialement à la direction axiale, **caractérisée en ce que** l'ensemble de la face (2a) orientée vers la face de glissement (4a) est constitué de deux faces partielles (2b,2c) disposées l'une à la suite de l'autre dans la direction d'extension de la hauteur (H), d'une première face partielle (2b) exempte de gradin qui est réalisée pour s'étendre d'une manière cylindrique pour former une face d'étanchéité (2b), et d'une deuxième face partielle (2c) qui, en partant de la première face partielle (2b) est réalisée pour s'élargir dans la direction d'extension de la hauteur (H), et **en ce que** la première face partielle (2b), en partant de la face frontale, s'étend en direction de la hauteur (H).

2. Bague d'étanchéité à sec selon la revendication 1, **caractérisée en ce que** la deuxième face partielle (2c) s'élargit d'une manière conique.

3. Bague d'étanchéité à sec selon l'une des revendications précédentes, **caractérisée en ce que** la bague d'étanchéité présente un emplacement de joint (2l) avec un jeu de compensation (S), **en ce que** la deuxième face partielle (2c) s'élargit dans la direction radiale selon un écart maximal (B) et **en ce que** le jeu de compensation (S) présente une largeur de "2 fois Π fois B".

4. Bague d'étanchéité à sec selon l'une des revendications précédentes, **caractérisée en ce que** sont disposés selon une répartition le long de la face (2a) dans la direction périphérique une pluralité de nervures (2p).

5. Bague d'étanchéité à sec selon l'une des revendications précédentes, **caractérisée en ce que** celle-ci comprend une partie d'étanchéité (2) qui est réalisée en un matériau synthétique, comme en polytétrafluoroéthylène (PTFE), un polymère haute température modifié comme le polyétheréthercétone (PEEK), en polyéthercétone (PEK), en polyimide (PI), en sulfure de polyphénylène (PPS), en polybenzèneimidazol (PPI), en polyamidimide (PAI).

6. Bague d'étanchéité à sec selon l'une des revendications précédentes, **caractérisée en ce que** celle-ci est réalisée de façon que la seconde face partielle (2c) s'élargissant d'une manière conique peut être disposée vers l'enceinte du cylindre.

7. Bague d'étanchéité à sec selon l'une des revendications précédentes, **caractérisée en ce que** celle-ci présente une division (2l), et **en ce que** la partie d'étanchéité (2) présente une épaisseur de paroi radiale (D) diminuant vers la division (2l).

8. Dispositif d'étanchéité d'une tige de piston (4) fonctionnant à sec avec une bague d'étanchéité à sec (12) entourant celle-ci selon l'une des revendications précédentes, **caractérisé en ce que** la bague d'étanchéité à sec délimite un côté haute pression d'un côté basse pression, et **en ce que** la bague d'étanchéité à sec est disposée de telle sorte que la seconde face partielle (2c) est disposée vers le côté haute pression et s'élargit vers le côté haute pression.
